(19) Europäisches Patentamt
European Patent Office
Office européen des brevets

(11) EP 1 842 871 A1

(12) EUROPÄISCHE PATENTANMELDUNG

(43) Veröffentlichungstag:
**10.10.2007 Patentblatt 2007/41**

(21) Anmeldenummer: **07006483.7**

(22) Anmeldetag: **29.03.2007**

(51) Int Cl.:
***C08J 5/18*** *(2006.01)* ***C08K 5/1515*** *(2006.01)*
*H01B 7/00 (2006.01)* *H01G 4/00 (2006.01)*
*H01L 31/00 (2006.01)*

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **06.04.2006 DE 102006016157**

(71) Anmelder:
- **Mitsubishi Polyester Film GmbH**
**65203 Wiesbaden (DE)**
- **Schäfer Additivsysteme GmbH**
**67122 Altrip (DE)**

(72) Erfinder:
- **Kliesch, Holger, Dr.**
**65462 Ginsheim-Gustavsburg (DE)**
- **Jesberger, Martin, Dr.**
**55122 Mainz (DE)**
- **Kuhmann, Bodo**
**65594 Runkel (DE)**
- **Hilkert, Gottfried, Dr.**
**55291 Saulheim (DE)**
- **Schäfer, Volker, Dr.**
**67122 Altrip (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

# (54) Hydrolysebeständige Polyesterfolie mit Hydrolyseschutzmittel

(57) Die Erfindung betrifft eine Polyesterfolie enthaltend einen Hydrolysestabilisator, dadurch gekennzeichnet, dass der Hydrolysestabilisator ein epoxidierter Fettsäurealkylester oder eine Mischung von epoxidierten Fettsäurealkylestern oder ein epoxidiertes Fettsäureglycerid oder eine Mischung von epoxidierten Fettsäureglyceriden ist. Der Hydrolysestabilisator wird, aufgesaugt durch ein Trägermaterial, als dry liquid dem Polyester zugesetzt.

EP 1 842 871 A1

## Beschreibung

Die Erfindung betrifft eine hydrolysebeständige Polyesterfolie, deren Dicke bevorzugt im Bereich von 0,4 bis 500 μm liegt. Die Folie enthält mindestens ein Hydrolyseschutzmittel und zeichnet sich durch ihre geringe Hydrolysegeschwindigkeit aus. Die Erfindung betrifft ferner ein Verfahren zur Herstellung der Folie sowie ihre Verwendung.

Folien aus Polyestern im angegebenen Dickenbereich sind hinreichend bekannt. Nachteilig an solchen Polyesterfolien ist jedoch ihre Hydrolyseneigung, insbesondere bei Temperaturen oberhalb der Glastemperatur des jeweiligen Polyesters. Unter Hydrolyseneigung wird hierbei die Eigenschaft des Polyesters verstanden, unter feuchten Bedingungen hydrolytisch abzubauen, welches beispielsweise an einer Reduzierung des IV- bzw. SV-Wertes (Viskosität) erkennbar ist. Dies ist insbesondere bei Anwendungen mit höherer Temperaturbeanspruchung wie in Folienkondensatoren, Kabelummantelungen, Flachbandkabeln, Motorschutzfolien, aber auch in Langzeitanwendungen wie in Verglasungen und Außenanwendungen ein limitierender Faktor für den Einsatz von Polyesterfolien.

Besonders ausgeprägt ist die Hydrolyseneigung bei aliphatischen Polyestern, aber auch bei aromatischen Polyestern wie PBT und PET. Wenn die Hydrolyseneigung von PET zu groß für die Anwendung wird, muss man auf das noch etwas hydrolysestabilere PEN zurückgreifen oder sogar auf andere Polymere wie z. B. Polyetherimide oder Polyimide. Diese sind jedoch deutlich teurer als PET und deshalb häufig aus wirtschaftlichen Gründen keine geeignete Lösung.

Es wurde deshalb bereits vorgeschlagen, die Hydrolysestabilität von Polyesterfolien durch die Einarbeitung von Hydrolysestabilisatoren zu verbessern.

Hydrolysebeständigere Polyesterrohstoffe, die durch Verwendung von Carbodiimiden erhalten werden, sowie daraus hergestellte Fasern und Folien sind bekannt (US-A-5,885,709, EP-A-0 838 500, CH-A-621 135). Folien, die aus solchen Rohstoffen hergestellt werden, neigen jedoch sowohl bei der Herstellung als auch bei der späteren Verwendung zu Ausgasungen von Isocyanaten und anderen schleimhautreizenden bzw. gesundheitsschädlichen Neben- und Abbauprodukten. Dies ist bei flächigen Gebilden wie Folien mit großer Oberfläche ein weit größeres Problem als bei Spritzgussteilen oder ähnlichen.

Hydrolysestabilisatoren, welche Epoxygruppen aufweisen, führen ebenfalls zu einer Hydrolysestabilisierung und sind beispielsweise in der EP-A-0 292 251 A2 oder US-A-3,657,191 beschrieben. Diese Verbindungen basieren jedoch auf der Erzeugung von Oxiranringen mittels Epichlorhydrin und neigen u. a. aufgrund ihrer endständigen Epoxygruppen bei Erhitzung zum Abspalten niedermolekularer toxischer Verbindungen, so dass ähnliche Probleme wie bei der Verwendung von Carbodiimiden mit dem Einsatz dieser Substanzen verbunden sind. Außerdem ist ihre Einbindung in die Polyestermatrix ungenügend, was zu langen Reaktionszeiten und bei verstreckten Polyesterfolien zu einer hohen, unerwünschten Trübung führt.

Außerdem haben bekannte Hydrolysestabilisatoren wie Carbodiimide und andere Substanzen wie die in der EP-A-0 292 251 beschriebenen den Nachteil, dass sie teilweise zu starken Molekulargewichtszunahmen (Viskositätsanstieg) im Polymer während der Extrusion führen und so den Extrusionsprozess instabil und schwer beherrschbar machen.

In der DE 103 49 168 A1 werden Mischungen aus epoxidierten Fettsäurealkylestern und epoxidierten Fettsäureglyceriden als Hydrolysestabilisatoren u. a. für Industrieöle, Pflanzenester, Polyurethane und Polyester beschrieben, die in ihrer bevorzugten Ausführungsform als dritte Mischungskomponente bis zu 30 Gew.-% eines Carbodiimids enthalten. Es fehlen Hinweise auf eine geeignete Einarbeitung solcher Hydrolysestabilisatoren in eine Polyesterfolie. Die erfindungsgemäße, vorteilhafte Verwendung eines sog. "dry liquid" wird nicht erwähnt.

Aufgabe der vorliegenden Erfindung war es, einen hydrolysebeständigen Polyesterrohstoff und daraus hergestellte Folien zur Verfügung zu stellen, welche die beschriebenen Nachteile des Standes der Technik vermeiden.

Diese Aufgabe wird gelöst durch eine Polyesterfolie, welche neben Polyester bevorzugt 0,1 - 20 Gew.-% (bezogen auf das Gewicht der fertigen Folie) eines Hydrolysestabilisators auf Basis von epoxidierten Fettsäurealkylestern und/oder epoxidierten Fettsäureglyceriden enthält. Die oben gemachten und nachfolgenden Angaben gelten sinngemäß auch für den der Folie zu Grunde liegenden erfindungsgemäßen Polyesterrohstoff.

Die Folie enthält als Hauptbestandteil einen Polyester. Geeignete Polyester sind beispielsweise Polyethylenterephthalat (PET), Polyethylennaphthalat (PEN), Polybutylenterephthalat (PBT), Polytrimethylenterephthalat (PTT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei PET, PBT, PEN und PTT sowie deren Mischungen und Co-Polyester bevorzugt sind.

Zur Herstellung der Polyester können neben den Hauptmonomeren wie Dimethylterephthalat (DMT), Ethylenglycol (EG), Propylenglycol (PG), 1,4-Butandiol, Terephthalsäure (TA), Benzoldicarbonsäure und/oder 2,6-Naphthalindicarbonsäure (NDA) auch z. B. Isophthalsäure (IPA), trans- und/oder cis-1,4-Cyclohexandimethanol (c-CHDM, t-CHDM oder c/t-CHDM) und andere geeignete Dicarbonsäurekomponenten (oder Dicarbonsäureester) und Diolkomponenten verwendet werden. Entsprechende Copolyester sind von der vorliegenden Erfindung mit umfasst.

Bevorzugt sind Polymere, bei denen die Dicarbonsäurekomponente zu 90 Gew.-% (bezogen auf die Gesamtmenge der Dicarbonsäurekomponente) und mehr, insbesondere zu 95 Gew.-% und mehr, aus TA besteht. Bevorzugt sind weiterhin Thermoplaste, bei denen die Diolkomponente zu 90 Gew.-% und mehr, insbesondere zu 93 Gew.-% (bezogen auf die Gesamtmenge der Diole) und mehr, aus EG besteht. Bevorzugt sind auch Polymere, bei denen der Diethylenglycolanteil am Gesamtpolymer im Bereich von 0,5 bis 2 Gew.-% liegt. Bei allen in diesem Absatz genannten Mengenangaben bleibt das Hydrolyseschutzmittel unberücksichtigt.

Geeignete Polyester sind auch aliphatische Polyester wie z. B. Polyhydroxybutyrat (PHB) und sein Copolymer mit Polyhydroxyvalerat (PHV) Polyhydroxybutyratvalerat (PHBV), Poly(e-Caprolacton) (PCL), SP 3/6, SP 4/6 (bestehend aus 1,3-Propandiol/Adipat bzw.1,4-Butandiol/Adipat), Polycaprolactam bzw. allgemein adipinsäurehaltige Polyester und die Ester anderer aliphatischer Carbonsäuren.

Die Folie gemäß der Erfindung kann weiterhin anorganische oder organische Partikel, die zur Einstellung der Oberflächentopographie oder Optik benötigt werden, enthalten. Solche Partikel sind z. B. Kalziumcarbonat, Apatit, Siliziumdioxid, Titandioxid, Aluminiumoxid, vernetztes Polystyrol, vernetztes Polymethylmethacrylat (PMMA), Zeolithe und andere Silikate wie Aluminiumsilikate. Diese Verbindungen werden im allgemeinen in Mengen von 0,05 bis 5 Gew.-%, vorzugsweise 0,1 bis 0,6 Gew.-%, (bezogen auf das Gewicht der Folie) eingesetzt.

Neben den erwähnten Additiven kann die Folie zusätzlich weitere Komponenten wie Flammschutzmittel und/oder Radikalfänger und/oder andere Polymere wie Polyetherimide enthalten.

Die erfindungsgemäße Folie enthält einen Hydrolysestabilisator (= Hydrolyseschutzmittel), der bevorzugt in Form eines "dry liquid" direkt bei der Folienherstellung in den Extruder zudosiert wird, wobei der Anteil des Hydrolysestabilisators bevorzugt im Bereich von 0,1 bis 20,0 Gew.-%, vorzugsweise von 1,0 bis 6,0 Gew.-% und besonders bevorzugt 1,5 - 4,5 Gew.-%, bezogen auf das Gewicht der Folie, liegt.

Geeignete Hydrolysestabilisatoren sind epoxidierte Fettsäurealkylester und/oder epoxidierte Fettsäureglyceride. Geeignete Hydrolysestabilisatoren sind Mischungen von Glycerinestern (Fettsäureglyceriden) oder reine Glycerinester, wobei die Glycerinester durch die folgende Formel beschrieben werden:

$$CH_2OR_1\text{-}CHOR_2\text{-}CH_2OR_3$$

wobei $R_1$ und $R_2$ und $R_3$ sowohl gleich als auch verschieden sein können. $R_1$, $R_2$ und $R_3$ folgen bevorzugt der folgenden Formel:

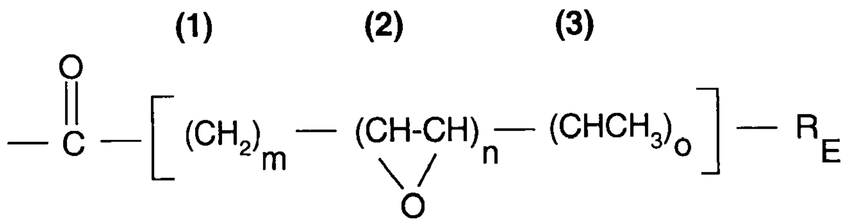

wobei $R_E$= $CH_3$ oder H und
m = 0 - 40, bevorzugt 7 - 20, besonders bevorzugt 10-16,
n = 1 - 10, bevorzugt 1 - 4, besonders bevorzugt 2 - 3 und
O = 0-4 bevorzugt 0 ist.

Die Reihenfolge der einzelnen Methylen ($CH_2$)- (**1**), Epoxid (CHOCH)- (**2**) und ($CHCH_3$)- (**3**) Gruppen ist dabei beliebig, wobei bevorzugt mindestens 2 Methylengruppen (**1**) und besonders bevorzugt 7 Methylengruppen (**1**) auf die Carbonylgruppe folgen, bevor eine oder mehrere der Gruppen (**2**) oder (**3**) und wieder (**1**) folgen. Die Indizes geben somit nur die Gesamtzahl (nicht die Reihenfolge) der in den Resten $R_1$, $R_2$ und $R_3$ enthaltenen Gruppen (1), (2) oder (3) wieder.

Wobei in Glyzerinestermischungen Reste $R_{1,2,3}$ mit m = 0 zu weniger als 30 und bevorzugt zu weniger als 20 Gew.-% und besonders bevorzugt zu weniger als 10 Gew.-% enthalten sein sollten (bezogen auf das Gewicht der Estermischung).

Einer oder mehrere der Reste $R_1$ und $R_2$ und $R_3$ können dabei auch folgendermaßen aussehen:

R=H
R = ungesättigte (doppelbindungshaltige, nicht vollständig epoxidierte) Fettsäure
R = $(PO_2)\text{-}O\text{-}(CH_2)_2\text{-}N(CH_3)_3$,

wobei solche Glyzerinester weniger bevorzugt sind und Glyzerinester, die diese Reste enthalten, in Glyzerinestermischungen bevorzugt zu weniger als 20 und besonders bevorzugt zu weniger als 5 Gew.-% enthalten sein sollten.

Da es sich bei den eingesetzten Glycerinestern oder Glycerinestermischungen bevorzugt um epoxidierte Öle biogenen Ursprungs handelt, enthalten diese neben den Glycerinestern meist noch geringe Mengen anderer Substanzen (Proteine usw.). Der Anteil dieser Substanzen liegt bevorzugt bei unter 10 Gew.-% und besonders bevorzugt bei unter 2 Gew.-%, bezogen auf das Gewicht des eingesetzten epoxidierten Öls.

Insbesondere der Anteil von Verbindungen mit einem Siedepunkt unter 210°C liegt bevorzugt bei weniger als 5 und besonders bevorzugt bei weniger als 1 Gew.-%.

Die Säurezahl der eingesetzten Hydrolysestabilisatoren liegt bevorzugt bei unter 10 und besonders bevorzugt unter 2 mg KOH pro Gramm (DIN EN ISO 3682).

Für die Einarbeitung und für die Effektivität der Hydrolyseschutzwirkung hat es sich als günstig erwiesen, wenn die Viskosität der eingesetzten Stabilisatoren größer als 300 mPa • s, bevorzugt größer als 500 mPa • s und besonders bevorzugt größer als 700 mPa • s bei 25 °C ist (DIN 53018).

Besonders geeignet sind solche Hydrolysestabilisatoren, die einen Epoxidsauerstoffgehalt von mindestens 0,5 Gew.-%, bevorzugt mindestens 1,5 und besonders bevorzugt von größer 2,0 Gew.-% aufweisen.

Geeignete epoxidierte Fettsäureglyceride bzw. deren Mischungen sind z. B. epoxidiertes Sojabohnenöl, epoxidiertes Leinöl, epoxidiertes Rüböl, epoxidiertes Sonnenblumenöl und epoxidiertes Fischöl bzw. sind in diesen epoxidierten Ölen enthalten (die Zusammensetzung der genannten Öle, insbesondere die Art und Menge der vorhandenen Fettsäuren, ist beispielsweise beschrieben in Römpp Chemie Lexikon, 10. Auflage, Georg Thieme Verlag, Stuttgart).

Als epoxidierte Fettsäurealkylester können grundsätzlich Ester von gesättigten, ungesättigten oder mehrfach ungesättigten Fettsäuren verwendet werden, die bevorzugt 1,5 - 15 Gew.-% Epoxidsauerstoff (bezogen auf den expoxidierten Ester) aufweisen. Dabei werden unter Alkyl geradkettige oder verzweigte Alkylreste mit bevorzugt 1 bis 20 C-Atomen verstanden. Bei den Fettsäuren handelt es sich bevorzugt um solche, die den bei den Fettsäureglyceriden genannten Definition $R_1$ - $R_3$ entsprechen.

Die erfindungsgemäßen Hydrolysestabilisatoren (epoxidierte Fettsäurealkylester und/oder epoxidierte Fettsäureglyceride) werden bevorzugt getrennt, d. h. entweder epoxidierte Fettsäurealkylester oder deren Mischungen oder epoxidierte Fettsäureglyceride oder deren Mischungen, eingesetzt. Es ist jedoch auch möglich, Mischungen von Estern und Glyceriden zu verwenden. In jedem dieser Fälle ist es bevorzugt, die Hydrolysestabilisatoren in Form eines "dry liquid" einzusetzen, wie näher ausgeführt wird. Insbesondere bevorzugt ist dabei die Verwendung von epoxidierten Fettsäureglyceriden in Form von epoxidierten Ölen biogenen Ursprungs. Die erfindungsgemäßen Hydrolysestabilisatoren bzw. die sie enthaltenden Öle sind bekannt und kommerziell erhältlich (vgl. z. B. die Produkte der Ausführungsbeispiele).

Als epoxidierte Fettsäurealkylester werden bevorzugt die thermisch stabilen 2-Ethylhexylester ungesättigter Fettsäuren oder Fettsäuregemische der Rüböl, Leinöl, Sojaöl oder Fischöl zugrunde liegenden Fettsäuren eingesetzt, welche bevorzugt Epoxidgehalte von 1,5 - 15 Gew.-% Epoxidsauerstoff (bezogen auf die epoxidierten Fettsäurealkylester), vorzugsweise 4 - 8 Gew.-%, aufweisen.

Weiterhin hat es sich als günstig erwiesen, wenn der Folie bzw. dem Polyesterrohstoff ein Stabilisator in Form eines Radikalfängers hinzugegeben wird, da dadurch dem Verlust an aktiven Oxirangruppen in der Extrusion durch radikalische Nebenreaktionen entgegengewirkt wird. Zweckmäßigerweise enthält die erfindungsgemäße Folie solche Stabilisatoren als Radikalfänger bzw. Thermostabilisatoren in Mengen von 50 bis 15000 ppm, bevorzugt 100 bis 5000 ppm, besonders bevorzugt 300 bis 1000 ppm, bezogen auf das Gewicht der Folie. Die dem Polyesterrohstoff zugegebenen Stabilisatoren werden beliebig ausgewählt z. B. aus der Gruppe der primären Stabilisatoren wie sterisch gehinderte Phenole oder sekundäre aromatische Amine oder der Gruppe der sekundären Stabilisatoren wie Thioether, Phosphite und Phosphonite sowie Zinkdibutyldithiocarbamat oder Mischungen aus primären und sekundären Stabilisatoren. Bevorzugt sind die phenolischen Stabilisatoren. Zu den phenolischen Stabilisatoren zählen insbesondere sterisch gehinderte Phenole, Thiobisphenole, Alkylidenbisphenole, Alkylphenole, Hydroxybenzyl-Verbindungen, Acylaminophenole und Hydroxyphenylpropionate (entsprechende Verbindungen sind beispielsweise beschrieben in "Kunststoffadditive", 2. Ausgabe, Gächter Müller, Carl Hanser-Verlag, und in "Plastics Additives Handbook", 5. Ausgabe, Dr. Hans Zweifel, Carl Hanser-Verlag). Besonders bevorzugt sind die Stabilisatoren mit folgenden CAS-Nummern: 6683-19-8, 36443-68-2, 35074-77-2, 65140-91-2, 23128-74-7, 41484-35-9, 2082-79-3 sowie ®Irganox 1222 der Firma Ciba Specialties, Basel, Schweiz, wobei in besonderen Ausführungsformen die Typen ®Irganox 1010, ®Irganox 1222, ®Irganox 1330 und ®Irganox 1425 oder Mischungen daraus eingesetzt werden.

Überraschenderweise hat es sich als günstiger erwiesen, wenn der Radikalfänger nicht dem Hydrolysestabilisator, sondern dem Polyesterrohstoff bereits bei der Polymerherstellung hinzugegeben wird.

Das Hydrolyseschutzmittel wird bevorzugt in Form eines "dry liquid" in den Extruder dosiert. D. h. mindestens 50 % des Hydrolyseschutzmittels, bevorzugt mindestens 75 % und besonders bevorzugt mehr als 95 %, sind von einem Trägermaterial aufgesaugt worden. Geeignete Trägermaterialien sind u. a. Silikate, bevorzugt synthetische Kieselsäure wie Sipernat 22LS (Degussa) oder Hi-Sil ABS (PPG Industries), Diatomeensilikate, Kalziumsilikate, Zeolithe, Aluminiumphosphate, polymere Molekularsiebe oder Kohlenstoffmolekularsiebe. Die mittlere Korngröße $d_{50}$ der Partikel liegt

dabei bevorzugt unter 300 µm, insbesondere unter 150 µm und besonders bevorzugt unter 50 µm. Die Ölabsorption (DBP, nach DIN 53601) ist größer als 20 g/100 g, bevorzugt größer als 100 g/100 g und besonders bevorzugt größer als 200 g/100 g, jeweils bezogen auf die trockene Substanz. Das Trägermaterial wird mittels eines Rührwerkes in das Hydrolyseschutzmittel eingebracht.

Das Hydrolyseschutzmittel [d. h. hier Trägermaterial mit aufgesaugtem Hydrolyseschutzmittel (= dry liquid)] und evtl. daneben noch vorliegendes freies Hydrolyseschutzmitte wird bevorzugt direkt in den/die Extruder bei der Folienherstellung eingebracht. Mit Trägermaterial werden im Gegensatz zu der Dosierung von Hydrolyseschutzmittel ohne Trägermaterial auch bei der Einbringung in Einschneckenextruder und bei der Dosierung direkt in den Extrudereinzug gute Hydrolyseschutzergebnisse erzielt. Das Hydrolyseschutzmittel (auf Trägermaterial) kann auch über die Masterbatchtechnologie eingebracht werden. D. h. das Hydrolyseschutzmittel (mit Trägermaterial) wird in einem Extruder (bevorzugt ein Mehrschneckenextruder) in ein erfindungsgemäßes Polymer eingebracht. Dieses Polymer wird dann bei der Folienherstellung pur oder mit anderen erfindungsgemäßen Polymeren gemischt und erneut extrudiert. Dieses Verfahren ist jedoch weniger bevorzugt, da bereits im ersten Extrusionsschritt Hydrolyseschutzmittel verbraucht (abreagiert) wird, welches dann in der Folie nicht mehr als aktive Substanz zur Verfügung steht.

Die Folie bzw. der Polyesterrohstoff enthält neben dem Hydrolyseschutzmittel bevorzugt mindestens 0,1, insbesondere mindestens 0,5 und besonders bevorzugt mindestens 1 Gew.-% Trägermaterial.

Die Folie gemäß der Erfindung wird im allgemeinen nach an sich bekannten Extrusionsverfahren hergestellt und ist ein- oder mehrschichtig, wobei der Hydrolysestabilisator bevorzugt in allen Schichten enthalten ist, jedoch auch Ausführungen möglich sind, in denen nicht alle Schichten mit dem Hydrolysestabilisator ausgerüstet sind.

Bei dem Verfahren zur Herstellung der erfindungsgemäßen Folien wird zweckmäßigerweise so vorgegangen, dass die entsprechenden Schmelzen durch eine Flachdüse extrudiert werden, die so erhaltene Folie zur Verfestigung auf einer oder mehreren Walzen (Kühlwalze) als weitgehend amorphe Vorfolie abgezogen und abgeschreckt wird, die Folie anschließend erneut erhitzt und biaxial gestreckt (orientiert) und die biaxial gestreckte Folie thermofixiert wird. Im Bereich der Extrusion hat es sich dabei als günstig erwiesen, wenn Temperaturen von 295 °C nicht überschritten werden. Besonders günstig ist es, wenn der Bereich der Düse und speziell der Bereich der Düsenlippe und nahe daran nicht wärmer als 290 °C, bevorzugt nicht wärmer als 285 °C und besonders bevorzugt nicht wärmer als 275 °C ist.

Die biaxiale Verstreckung wird im Allgemeinen sequentiell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Dies führt zu einer Orientierung der Molekülketten. Das Verstrecken in Längsrichtung lässt sich mit Hilfe zweier entsprechend dem angestrebten Streckverhältnis verschieden schnell laufender Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im Allgemeinen werden die Längs- und auch die Querstreckung bei $T_g$ + 10°C bis $T_g$ + 60 °C ($T_g$ = Glastemperatur der Folie) durchgeführt. Das Längsstreckverhältnis liegt allgemein im Bereich von 2 : 1 bis 6 : 1, vorzugsweise 3 : 1 bis 4,5 : 1. Das Querstreckverhältnis liegt allgemein im Bereich von 2 : 1 bis 5 : 1, vorzugsweise 3 : 1 bis 4,5 : 1 und das der gegebenenfalls durchgeführten zweiten Längs- und Querstreckung liegt bevorzugt bei 1,1 : 1 bis 5 : 1.

Die erste Längsstreckung kann gegebenenfalls gleichzeitig mit der Querstreckung (Simultanstreckung) durchgeführt werden. Als besonders günstig hat es sich dabei erwiesen, wenn das Streckverhältnis in Längs- und Querrichtung jeweils größer als 3,0 ist.

Bei der nachfolgenden Thermofixierung wird die Folie etwa 0,1 bis 10 s lang bei einer Temperatur von ca. 150 bis 260 °C, vorzugsweise 200 bis 245 °C, gehalten. Anschließend an beziehungsweise beginnend mit der Thermofixierung wird die Folie bevorzugt um 0 bis 15 %, insbesondere um 1,5 bis 8 %, in Quer- und gegebenenfalls auch in Längsrichtung relaxiert, und die Folie wird dann in üblicher Weise abgekühlt und aufgewickelt.

Eine auf diese Weise hergestellte Folie weist eine deutlich geringere Hydrolyseneigung sowohl bei Raumtemperatur als auch bei Temperaturen bis 210°C auf als eine unmodifizierte Polyesterfolie. Die Stabilisierung ist dabei weitgehend unabhängig von der Foliendicke und der Temperatur in einem Messbereich von 25 bis 210 °C. So weist beispielsweise eine 12 µm dicke einschichtige PET-Folie (DEG-Gehalt 1 Gew.-% und Start SV-Wert von 720) mit 2,5 Gew.-% eines Hydrolysestabilisators aus epoxidiertem Sojabohnenöl mit einem Epoxidsauerstoffgehalt von 8 Gew.-% (aufgezogen auf Hi-Sil ABS von PPG Industries) nach 96 h im Autoklaven bei Wasserdampfsättigung und 110°C noch einen SV-Wert von über 580 auf und ist damit noch mechanisch stabil, während eine unstabilisierte Folie nach dieser Zeit bereits unter einen SV-Wert von 400 abgefallen ist und damit so gut wie keine Biegebruchfestigkeit mehr aufweist. Die stabilisierte Folie hält 200 % länger unter den genannten Bedingungen aus, bis sie die kritische Grenze von 400 SV-Einheiten erreicht. Denselben relativen Zeitgewinn findet man auch bei 80 °C und bei 170 °C.

Besonders überraschend war, dass sich trotz der guten Langzeithydrolysestabilisierung bei der Folienherstellung kein unerwünschter Viskositätsaufbau im Extruder zeigte und kein erhöhtes Gel-/ oder Stippenniveau beobachtet wurde. Überraschend war auch die deutliche Verbesserung der Hydrolyseschutzwirkung durch die Verwendung eines Trägermaterials (Einsatz als dry liquid).

Folien, die mittels der genannten Hydrolysestabilistoren stabilisiert werden, eignen sich hervorragend zur Herstellung von Produkten, die Polyesterfolien enthalten und entweder für eine lange Lebensdauer (größer 1 Jahr) ausgelegt sind oder die während ihres Einsatzes mit höheren Temperaturen (größer 80 °C), insbesondere bei hoher Feuchte, konfrontiert werden, und für Außenanwendungen.

So eignen sie sich hervorragend zur Herstellung von Folienkondensatoren (bevorzugter Dickenbereich 0,4-12 μm). Diese können auf den bekannten konventionellen Wegen und Prozessabläufen (u. a. Metallisierung, Konfektionierung, Wickeln, Schopierung, Kontaktierung, Becherverguss usw.) hergestellt werden und weisen gegenüber den herkömmlichen Polyesterfolienkondensatoren eine deutlich erhöhte Lebensdauer auf und führen im Gegensatz zu schon beschriebenen Kondensatoren mit Carbodiimidstabilisatoren auch bei starkem Erhitzen nicht zur Emission von gesundheitsschädlichen Isocyanaten. Für die Herstellung von Kondensatoren hat es sich als günstig erwiesen, wenn die Folien einen Längsschrumpf von weniger als 4 % und einen Querschrumpf von weniger als 1 % bei 200 °C aufweisen, da sie sich dann besonders gut zur Herstellung von SMD-Kondensatoren eignen. Die erfindungsgemäßen Folien weisen bevorzugt solch niedrige Schrumpfwerte auf.

Eine weitere Anwendung sind z. B. Flachbandkabel in Automobilen. Hierzu werden Folien (bevorzugt 12 - 200 μm) mittels eines Heißsiegelklebers (z. B. EKP-Heißsiegellack 230 der Firma EKP Verpackungslacke GmbH (Deutschland)) mit Kupfer laminiert. Verbunde, die Polyester mit den erfindungsgemäßen Hydrolyseschutzmitteln enthalten, halten dabei den in Automobilen auftretenden mechanischen Belastungen (u. a. Vibrationen) weit länger Stand als Verbunde mit herkömmlichen Polyesterfolien. Hierbei ist jedoch darauf zu achten, dass auch die Kleber weitgehend hydrolyseunempfindlich sind (bei polyesterbasierten Klebern empfiehlt sich eine Ausrüstung mit den genannten Hydrolysestabilisatoren).

Eine weitere bevorzugte Anwendung ist das Rückseitenlaminat von Solarmodulen.

In den nachfolgenden Ausführungsbeispielen erfolgt die Messung der einzelnen Eigenschaften gemäß den angeführten Normen bzw. Verfahren.

## Messmethoden

DIN = Deutsches Institut für Normung

### Standardviskosität (SV)

Die Standardviskosität SV wird - angelehnt an DIN 53726 - durch die Messung der relativen Viskosität $\eta_{rel.}$ einer 1 Gew.-%igen Lösung in Dichloressigsäure (DCE) in einem Ubbelohde Viskosimeter bei 25 °C gemessen. Der SV-Wert ist wie folgt definiert:

$$SV = (\eta_{rel.} - 1) \cdot 1000$$

### Rauheit

Die Rauheit $R_a$ der Folie wird nach DIN 4768 bei einem Cut-off von 0,25 mm bestimmt.

### Schrumpf

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_{0\,TD}$ und $L_{0\,MD}$) und werden 15 min bei der angegeben Schrumpfungstemperatur (hier 200 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \bullet (L_{0\,MD} - L_{MD}) / L_{0\,MD}$$

$$\text{Schrumpf [\%] TD} = 100 \bullet (L_{0\,TD} - L_{TD}) / L_{0\,TD}$$

**Messung der Trübung**

Die Messung erfolgt an dem Hazegard Hazemeter XL-211 der Fa. BYK Gardner (s. Figur 1). Das Messgerät ist 30 min vor der Messung einzuschalten. Es ist darauf zu achten, dass der Lichtstrahl durch die Kugel zentrisch an die Austrittsöffnung geht.

Herstellung, Form und Anzahl der Proben:

Aus der zu untersuchenden Folie werden je 5 Proben mit einer Größe von 100 • 100 mm ausgeschnitten. Die Längs- und Querrichtung werden am Rand gekennzeichnet, da die Messungen in beiden Maschinenrichtungen erfolgen.
Messung der Trübung

- Schalter 1 "OPEN" drücken
- Schalter 2 auf "X10" einstellen und mit dem "Zero"-Knopf Digitalanzeige auf 0.00 kalibrieren
- Umschalten des Schalters 1 auf "Referenz" und des Schalters 2 auf "X1"
- Mit dem "Calibrate"-Knopf Digitalanzeige auf 100 bringen
- Probe in Längsrichtung einlegen
- Anzeigewert für die Transparenz ablesen
- Die Digitalanzeige mit dem "Calibrate"-Knopf auf 100 kalibrieren
- Schalter 1 auf "OPEN" stellen
- Anzeigewert für die Trübung in Längsrichtung ablesen
- Probe in Querrichtung drehen
- Anzeigewert für die Trübung in Querrichtung ablesen

Auswertung

Die Trübung erhält man durch die Mittelung der jeweiligen 5 Einzelwerte (längs und quer).

Autoklavierung

Die Folien (10 • 2 cm) werden an einem Draht in den Autoklaven (Adolf Wolf SA-NOklav Typ: ST-MCS-204) gehängt und der Autoklav mit 2 l Wasser befüllt. Nach dem Schließen des Autoklaven wird dieser erhitzt. Bei 100 °C wird die Luft durch den Wasserdampf über das Ablassventil verdrängt. Dies wird nach ca. 5 min geschlossen, worauf die Temperatur auf 110°C und der Druck auf 1,5 bar ansteigt. Nach der eingestellten Zeit wird der Autoklav automatisch abgeschaltet und nach Öffnen des Ablassventils die Folien entnommen. An diesen wird dann der SV-Wert bestimmt.

**Beispiele**

Hydrolysestabilisator 1 (Hystab1)

2 Teile (Gewichtsanteile) epoxidiertes Sojabohnenöl (Merginat ESB von HOBUM Oleochemicals GmbH/ Deutschland) mit einem Epoxidsauerstoffgehalt von 8 Gew.-% werden mit einem Teil Hi-Sil ABS von PPG Industries USA gemischt.

Hydrolysestabilisator 2 (Hystab 2)

Polybio Hystab 10 DL von Schäfer Additvsysteme GmbH. Natürlicher epoxidierter Fettsäureester in Form eines "dry liquids". Dry Liquid basiert auf $SiO_2$-Partikeln.

Hydrolysestabilisator 3 (Hystab 3)

Epoxidiertes Sojabohnenöl (Merginat ESB von HOBUM Oleochemicals GmbH/Deutschland) mit einem Epoxidsauerstoffgehalt von 8 Gew.-%.

Rohstoffherstellung (hydrolysestabilisiertes Polymer)

PET mit Hydrolysestabilisator 1 (HyPET 1)

Ein Polyethylenterephthalatrohstoff (MB1) mit 10.000 ppm Sylobloc 44H (Grace) und 5000 ppm Aerosil TT600 (Degussa) (jeweils $SiO_2$) sowie 3000 ppm Irganox 1010 (Ciba) und einem DEG-Gehalt von 1 % wird in einem Zweischneckenextruder der Firma Coperion aufgeschmolzen und mit 12 Gew.-% Hydrolysestabilisator1 gemischt. Hydrolysestabilisator 1 wurde dabei mittels einer Rüttelrinne direkt in den Extrudereinzug dosiert. SV-Wert 792.

PET mit Hydrolysestabilisator 2 (HyPET 2)

Ein Polyethylenterephthalatrohstoff (MB 1) mit 10.000 ppm Sylobloc 44H (Grace) und 5000 ppm Aerosil TT600 (Degussa) sowie 3000 ppm Irganox 1010 (Ciba) und einem DEG-Gehalt von 1 % wird in einem Zweischneckenextruder der Firma Coperion aufgeschmolzen und mit 12 Gew.-% Hydrolysestabilisator2 gemischt. Hydrolysestabilisator 2 wurde dabei mittels einer Rüttelrinne direkt in den Extrudereinzug dosiert. SV-Wert 790.

PET mit Hydrolysestabilisator 3 (HyPET 3)

Ein Polyethylenterephthalatrohstoff (MB 1) mit 10.000 ppm Sylobloc 44H (Grace) und 5000 ppm Aerosil TT600 (Degussa) sowie 3000 ppm Irganox 1010 (Ciba) und einem DEG-Gehalt von 1 % wird in einem Zweischneckenextruder der Firma Coperion aufgeschmolzen und mit 8 Gew.-% Hydrolysestabilisator 3 gemischt. Hydrolysestabilisator 3 wurde dabei mittels einer Pumpe direkt in die Schmelze nach der Entgasungszone dosiert. SV-Wert 788.

Weitere verwendete Rohstoffe

| | |
|---|---|
| Rohstoff R1 | PET (Typ RT49, Invista Deutschland), SV-Wert 790 |
| Masterbatch MB1 | 1,0 Gew.-% Sylobloc 44H, 0,5 Gew.-% Aerosil TT600 und 98,2 Gew.-% PET; SV-Wert 790; DEG-Gehalt von 1 Gew.-% sowie 3000 ppm Irganox 1010 (Ciba; Zugabe Irganox während der Polyesterpolymerisation). |

Folienherstellung:

Thermoplast-Chips (HyPET 1 - 3 und MB1 sowie R1) wurden gemäß den in den Beispielen angegebenen Verhältnissen gemischt und bei 278 °C in einem Zweischneckenextruder (Japan Steel Works) extrudiert. Die Dosierung der Hydrolysestabilisatoren (Hystab 1 - 2 in Bsp. 4 + 5) in Form des "dry liquid" erfolgte über eine Rüttelrinne direkt in den Extrudereinzug. Hystab 3 (Beispiel 6) wurde mittels einer Pumpe in die Schmelze nach der Entgasung dosiert. Das geschmolzene Polymer wurde aus einer Düse über eine Abzugswalze abgezogen. Die Dicke dieser Vorfolie betrug 530 $\mu$m. Der Film wurde um den Faktor 3,4 in Maschinenrichtung bei 116°C gestreckt und in einem Rahmen bei 110°C eine Querstreckung um den Faktor 3,1 durchgeführt. Anschließend wurde die Folie bei 225 °C thermofixiert und in Querrichtung um 3 % bei Temperaturen von 200 bis 180°C relaxiert. Die Endfoliendicke betrug 50 $\mu$m.

Die Eigenschaften der hergestellten Folien sind der nachstehenden Tabelle zu entnehmen.

Die Ergebnisse zeigen, dass der Einsatz der Hydrolysestabilisatoren als "dry liquid" (Beispiele 1, 2, 4, 5) noch weitere Vorteile in der Stabilisierung gegenüber dem Einsatz der puren Substanzen (Beispiele 3, 6) bietet. Besonders gut ist die Hydrolysestabilisierung, wenn das "dry liquid" direkt in den Extrudereinzug dosiert wird und ist hier überraschenderweise sogar der Dosierung direkt in die Schmelze überlegen.

**Tabelle**

| | | Beispiel 1 | Beispiel 2 | Beispiel 3 | Beispiel 4 | Beispiel 5 | Beispiel 6 |
|---|---|---|---|---|---|---|---|
| HyPET 1 | in Gew.-% | 33 | | | | | |
| HyPET 2 | in Gew.-% | | 33 | | | | |
| HyPET 3 | in Gew.-% | | | 33 | | | |
| R1 | in Gew.-% | 67 | 67 | 67 | 66 | 66 | 67,3 |
| MB1 | in Gew.-% | | | | 30 | 30 | 30 |

(fortgesetzt)

| | | Beispiel 1 | Beispiel 2 | Beispiel 3 | Beispiel 4 | Beispiel 5 | Beispiel 6 |
|---|---|---|---|---|---|---|---|
| Hystab 1 | in Gew.-% | | | | 4 | | |
| Hystab 2 | in Gew.-% | | | | | 4 | |
| Hystab 3 | in Gew.-% | | | | | | 2,7 |
| Foliendicke | in µm | 50 | 50 | 50 | 50 | 50 | 50 |
| SV-Wert (nach Folienherstellung) | | 767 | 773 | 771 | 777 | 769 | 773 |
| SV Wert nach 96 h bei 110 °C im Autoklav bei Wassersättigung | | 560 | 575 | 501 | 675 | 690 | 548 |

**Patentansprüche**

1. Polyesterfolie enthaltend einen Hydrolysestabilisator, **dadurch gekennzeichnet, dass** der Hydrolysestabilisator ein epoxidierter Fettsäurealkylester oder eine Mischung von epoxidierten Fettsäurealkylestern oder ein epoxidiertes Fettsäureglycerid oder eine Mischung von epoxidierten Fettsäureglyceriden ist.

2. Polyesterfolie nach Anspruch 1, **dadurch gekennzeichnet, dass** der Hydrolysestabilisator dem Polyester in Form eines dry liquid zugesetzt wird.

3. Polyesterfolie enthaltend einen Hydrolysestabilisator, **dadurch gekennzeichnet, dass** der Hydrolysestabilisator eine Mischung aus einem oder mehreren epoxidierten Fettsäurealkylestern und einem oder mehreren epoxidierten Fettsäureglyceriden ist und dem Polyester in Form eines dry liquid zugesetzt wird.

4. Polyesterfolie nach einem oder mehreren der Ansprüche 1 bis 3, **dadurch gekennzeichnet, dass** die Folie 0,1 bis 20 Gew.-% Hydrolysestabilisator enthält.

5. Polyesterfolie nach einem oder mehreren der Ansprüche 1 bis 4, **dadurch gekennzeichnet, dass** der Hydrolysestabilisator einen Epoxidsauerstoffgehalt von mindestens 0,5 Gew.-% aufweist.

6. Polyesterfolie nach einem oder mehreren der Ansprüche 1 bis 5, **dadurch gekennzeichnet, dass** als epoxidierte Fettsäureglyceride epoxidiertes Sojabohnenöl, epoxidiertes Leinöl, epoxidiertes Rüböl, epoxidiertes Sonnenblumenöl oder epoxidiertes Fischöl oder deren Mischungen eingesetzt werden.

7. Polyesterfolie nach einem oder mehreren der Ansprüche 1 bis 6, **dadurch gekennzeichnet, dass** als epoxidierte Fettsäurealkylester die 2-Ethylhexylester der ungesättigten Fettsäuren oder Fettsäuregemische aus Rüböl, Leinöl, Sojaöl oder Fischöl eingesetzt werden.

8. Polyesterfolie nach einem oder mehreren der Ansprüche 1 bis 7, **dadurch gekennzeichnet, dass** die epoxidierten Fettsäurealkylester einen Epoxidsauerstoffgehalt von 1,5- 15 Gew.-% aufweisen.

9. Polyesterfolie nach einem oder mehreren der Ansprüche 1 bis 8, **dadurch gekennzeichnet, dass** sie einen Radikalfänger enthält.

10. Polyesterfolie nach einem oder mehreren der Ansprüche 1 bis 9, **dadurch gekennzeichnet, dass** die Folie mindestens 0,1 Gew.-% Trägermaterial aus dem Zusatz des Hydrolysestabilisators in Form eines dry liquid enthält.

11. Polyesterfolie nach einem oder mehreren der Ansprüche 1 bis 10, **dadurch gekennzeichnet, dass** das Trägermaterial ein Silikat, bevorzugt eine synthetische Kieselsäure ist.

12. Polyesterfolie nach einem oder mehreren der Ansprüche 1 bis 11, **dadurch gekennzeichnet, dass** die Folie als Polyester Polyethylenterephthalat, Polybutylenterephthalat, Polyethylennaphthalat oder Polytrimethylenterephthalat oder deren Mischungen oder deren Copolyester enthält.

**13.** Polyesterfolie nach einem oder mehreren der Ansprüche 1 bis 12, **dadurch gekennzeichnet, dass** die Folie zusätzlich anorganische oder organische Partikel enthält.

**14.** Polyesterfolie nach einem oder mehreren der Ansprüche 1 bis 13, **dadurch gekennzeichnet, dass** die Folie einschichtig ist.

**15.** Polyesterfolie nach einem oder mehreren der Ansprüche 1 bis 14, **dadurch gekennzeichnet, dass** der Hydrolysestabilisator in allen Folienschichten enthalten ist.

**16.** Polyesterrohstoff mit einer Zusammensetzung gemäß einem oder mehreren der Ansprüche 1 bis 13.

**17.** Verfahren zur Herstellung einer Polyesterfolie nach einem oder mehreren der Ansprüche 1 bis 15, umfassend die Schritte

a) Herstellen einer ein- oder mehrschichtigen Folie durch Extrusion oder Coextrusion,
b) biaxiales Strecken der Folie und
c) Thermofixieren der gestreckten Folie.

**18.** Verwendung einer Polyesterfolie nach einem oder mehreren der Ansprüche 1 bis 15 zur Herstellung von Folienkondensatoren, Kabelummantelungen, Flachbandkabeln, Motorschutzfolien oder bei Verglasungen und Außenanwendungen.

**19.** Verwendung eines Polyesterrohstoffs nach Anspruch 16 zur Herstellung einer Polyesterfolie.

Figur 1

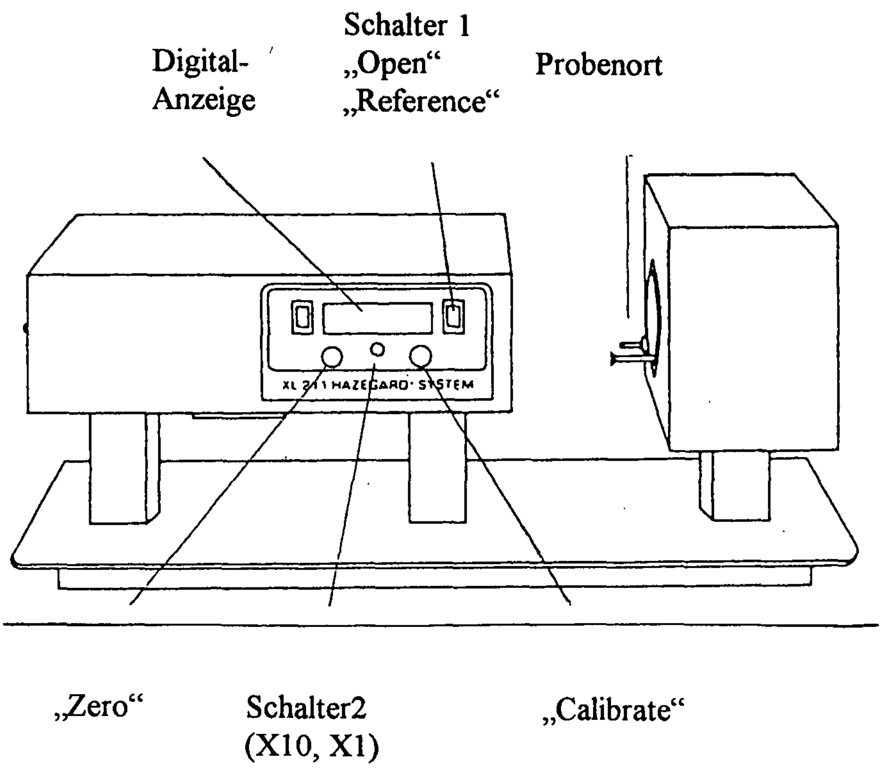
Schalter 1
„Open“
„Reference“
Digital-
Anzeige
Probenort
XL 211 HAZEGARD SYSTEM
„Zero“
Schalter2
(X10, X1)
„Calibrate“

Europäisches Patentamt

# EUROPÄISCHER RECHERCHENBERICHT

Nummer der Anmeldung
EP 07 00 6483

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 634 914 A (MITSUBISHI POLYESTER FILM GMBH [DE]) 15. März 2006 (2006-03-15)<br>* Ansprüche 1-16 *<br>* Absätze [0014], [0015], [0026] *<br>----- | 1-19 | INV.<br>C08J5/18<br>C08K5/1515<br><br>ADD.<br>H01B7/00<br>H01G4/00<br>H01L31/00 |

| RECHERCHIERTE SACHGEBIETE (IPC) |
|---|
| C08J |

Der vorliegende Recherchenbericht wurde für alle Patentansprüche erstellt

3

| Recherchenort | Abschlußdatum der Recherche | Prüfer |
|---|---|---|
| München | 19. Juli 2007 | Schambeck, Werner |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 07 00 6483

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-07-2007

| Im Recherchenbericht angeführtes Patentdokument | Datum der Veröffentlichung | Mitglied(er) der Patentfamilie | Datum der Veröffentlichung |
|---|---|---|---|
| EP 1634914 A | 15-03-2006 | DE 102004044326 A1 | 16-03-2006 |
| | | JP 2006077250 A | 23-03-2006 |
| | | KR 20060051183 A | 19-05-2006 |
| | | US 2006057409 A1 | 16-03-2006 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5885709 A
- EP 0838500 A
- CH 621135 A
- EP 0292251 A
- US 3657191 A
- DE 10349168 A1


### In der Beschreibung aufgeführte Nicht-Patentliteratur


- Römpp Chemie Lexikon. Georg Thieme Verlag
- Kunststoffadditive. Carl Hanser-Verlag
- Plastics Additives Handbook. Carl Hanser-Verlag